# EUROPEAN PATENT APPLICATION

(11) **EP 4 321 486 A1**
(43) Date of publication of application: **14.02.2024**
(21) Application number: 21941674.0
(22) Date of filing: 18.11.2021
(51) Int. Cl.: C01G 53/00, H01M 4/505, H01M 4/525, H01M 10/0525

(54) **FLUORINE-DOPED LITHIUM POSITIVE ELECTRODE MATERIAL, PREPARATION METHOD THEREFOR AND USE THEREOF**

(30) Priority: 11.05.2021 CN 202110509995
(71) Applicant: SVOLT ENERGY TECHNOLOGY CO., LTD, Changzhou, Jiangsu 213200 (CN)
(72) Inventor: WANG, Pengfei, hangzhou, Jiangsu 213200 (CN); YANG, Hongxin, hangzhou, Jiangsu 213200 (CN); LI, Zitan, hangzhou, Jiangsu 213200 (CN); QIAO, Qiqi, hangzhou, Jiangsu 213200 (CN); SHI, Zetao, hangzhou, Jiangsu 213200 (CN); GUO, Feng, hangzhou, Jiangsu 213200 (CN); XU, Xinpei, hangzhou, Jiangsu 213200 (CN)
(74) Representative: Groth & Co. KB
(86) International application number: PCT/CN2021/131509
(87) International publication number: WO 2022/237110

(57) **Abstract**

Provided in the present disclosure are a fluorine-doped lithium positive electrode material, a preparation method therefore and the use thereof. The preparation method includes: step S1, mixing and reacting NH₄F, LiₓNi_{y}Mn_{z}O₂ and water to obtain an intermediate product system, which includes fluorine-modified LiₓNi_{y}Mn_{z}O₂; and step S2, carrying out first calcination on the fluorine-modified LiₓNi_{y}Mn_{z}O₂ in a first oxygen-containing gas, so as to obtain a fluorine-doped lithium positive electrode material, wherein x=1 to 1.3, y=0.1 to 0.9, z=0.1 to 0.9, and x:(y+z)=1.4 to 1.6. Doping with fluorine in a positive electrode material results in the oxygen in the material being protected by fluorine, such that the primary efficiency of a lithium-ion battery is effectively improved. In addition, the fluorine content of the fluorine-doped lithium positive electrode material within the above range can better ensure the structural integrity of the material, and thus ensure the advantages of high primary efficiency, a good cycling performance and a good rate capability.

## Description

### TECHNICAL FIELD

The present disclosure relates to the technical field of lithium-ion batteries, in particular to a fluorine-doped lithium positive electrode material, and a preparation method therefor and use thereof.

### BACKGROUND

In the current background of energy conservation, emission reduction and environmental protection, the task of developing a chemical power supply system with high energy density and high power density is urgent. Lithium-rich manganese-based layered oxides (LMROs) have attracted increasing attention from researchers due to their high specific capacity of over 250 mAhg⁻¹, high operating voltage of 4.8 V, low cost and high safety. However, there are generally three major problems in a lithium-rich material: 1, primary Coulombic efficiency is low due to the precipitation of lattice oxygen in a charging and discharging process; 2, voltage attenuation is severe; and 3, the rate capability is poor.

### SUMMARY OF THE INVENTION

A main objective of the present disclosure is to provide a fluorine-doped lithium positive electrode material, and a preparation method therefor and use thereof, so as to solve problems of low primary efficiency and poor cycling performance and rate capability of a lithium-rich material in the prior art.

In order to achieve the above objective, according to one aspect of the present disclosure, a preparation method for a fluorine-doped lithium positive electrode material is provided. The preparation method includes: step S1, mixing NH₄F, LiₓNi_{y}Mn_{z}O₂ and water, and carrying out a reaction to obtain an intermediate product system, wherein the intermediate product system includes fluorine-modified LiₓNi_{y}Mn_{z}O₂; and step S2, carrying out a first calcination on the fluorine-modified LiₓNi_{y}Mn_{z}O₂ in a first oxygen-containing gas, so as to obtain a fluorine-doped lithium positive electrode material, where x=1 to 1.3, y=0.1 to 0.9, z=0.1 to 0.9, and x:(y+z)=1.4 to 1.6.

Further, the above step S1 includes: step S1, mixing an aqueous solution of NH₄F with LiₓNi_{y}Mn_{z}O₂ under a first stirring, and carrying out the reaction to obtain the intermediate product system.

Further, a mass ratio of NH₄F to LiₓNi_{y}Mn_{z}O₂ in the above aqueous solution of NH₄F is (0.01-0.1):1, preferably (0.05-0.07):1.

Further, the above first stirring is carried out at a speed ranging from 300 rpm to 2000 rpm for 1 min to 10 min.

Further, before the above step S2, the preparation method further includes: filtering the intermediate product system to obtain the fluorine-modified LiₓNi_{y}Mn_{z}O₂.

Further, the above first calcination is carried out at a temperature ranging from 400°C to 800°C for 4h to 8h.

Further, the above first oxygen-containing gas has a volume content of oxygen ranging from 10% to 100%.

Further, the above first oxygen-containing gas is air.

Further, the above first oxygen-containing gas has a flow rate ranging from 5 L/min to 10 L/min.

Further, the above preparation method further includes a preparation process for LiₓNi_{y}Mn_{z}O₂, the preparation process includes: carrying out a second calcination on a raw material system containing a NiₐMn_{b}CO₃ precursor and a lithium compound in a second oxygen-containing gas to obtain LiₓNi_{y}Mn_{z}O₂, where a=0.1 to 0.9, b=0.1 to 0.9, and a+b=1.

Further, a ratio of a molar weight of lithium in the above lithium compound to a sum of molar weights of nickel and manganese in the NiₐMn_{b}CO₃ precursor is in a range from 1.4 to 1.6.

Further, the above lithium compound is selected from one or more of lithium hydroxide, lithium carbonate, lithium chloride, and lithium acetate.

Further, the above NiₐMn_{b}CO₃ precursor has a particle size ranging from 5 µm to 10 µm, and preferably, the NiₐMn_{b}CO₃ precursor has a specific surface area ranging from 20 m²/g to 120 m²/g.

Further, the above NiₐMn_{b}CO₃ precursor has a tap density ranging from 1.4 g/cm³ to 2.5 g/cm³.

Further, the above second calcination is carried out at a temperature ranging from 750°C to 850°C for 8h to 12h.

Further, the above second oxygen-containing gas has a volume content of oxygen ranging from 10% to 100%.

Further, the above second oxygen-containing gas has a flow rate ranging from 5 L/min to 10 L/min.

Further, the above second oxygen-containing gas is air.

According to another aspect of the present disclosure, a fluorine-doped lithium positive electrode material is provided, and the fluorine-doped lithium positive electrode material is prepared by any above preparation method.

According to yet another aspect of the present disclosure, a lithium-ion battery is provided, including an electrolyte solution, a positive electrode material and a negative electrode material, the positive electrode material includes a lithium positive electrode material, and the lithium positive electrode material is any above fluorine-doped lithium positive electrode material.

By applying the technical solution of the present disclosure, firstly, NH₄F, LiₓNi_{y}Mn_{z}O₂ and water are mixed, NH₄F may be double hydrolyzed in the water, so that a solution is weakly acidic, moreover, HF acid obtained by hydrolysis may be adsorbed onto a surface of LiₓNi_{y}Mn_{z}O₂ and react with LiₓNi_{y}Mn_{z}O₂, and fluorine is doped into LiₓNi_{y}Mn_{z}O₂ to obtain the fluorine-modified LiₓNi_{y}Mn_{z}O₂. Afterwards, the first calcination is carried out on the above fluorine-modified LiₓNi_{y}Mn_{z}O₂ to further dope fluorine into the material, so as to obtain the fluorine-doped lithium positive electrode material doped with fluorine. Due to the protection of fluorine, the number of free oxygen, entering the electrolyte solution in the first charging and discharging process is reduced when the material is used as a positive electrode of a lithium-ion battery, the number of lithium ions solidified into Li₂O by the free oxygen is reduced, and thus the primary efficiency of the lithium-ion battery is effectively improved. At the same time, the cycling performance and rate capability of the battery are also improved compared with a lithium positive electrode material without being doped with F.

### BRIEF DESCRIPTION OF THE DRAWINGS

Accompanying drawings of the specification, which constitute a part of the present application, are used to provide a further understanding of the present disclosure, and the schematic embodiments of the present disclosure and descriptions thereof are used to explain the present disclosure, and do not constitute an improper limitation to the present disclosure. In the drawings:
FIG. 1 shows an SEM diagram of a fluorine-doped lithium positive electrode material prepared in Example 2.
FIG. 2 shows an SEM diagram of a fluorine-doped lithium positive electrode material prepared in Comparative Example 1.

### DETAILED DESCRIPTION

It should be noted that the embodiments and features in the embodiments of the present application may be combined with each other in the case of not conflict. The present disclosure will be described in detail below with reference to the accompanying drawings and in combination with the embodiments.

As described in the background of the present application, a lithium-rich material in the prior art has low primary efficiency and poor cycling performance and rate capability. In order to solve the above problems, the present application provides a fluorine-doped lithium positive electrode material, a preparation method therefore and use thereof.

According to a typical implementation of the present application, a preparation method for a fluorine-doped lithium positive electrode material is provided. The preparation method includes: step S1, NH₄F, LiₓNi_{y}Mn_{z}O₂ and water are mixed, and a reaction is carried out to obtain an intermediate product system, wherein the intermediate product system includes fluorine-modified LiₓNi_{y}Mn_{z}O₂, and a mass ratio of NH₄F to LiₓNi_{y}Mn_{z}O₂ is (0.05-0.07):1; and step S2, a first calcination is carried on the fluorine-modified LiₓNi_{y}Mn_{z}O₂ in a first oxygen-containing gas, so as to obtain a fluorine-doped lithium positive electrode material, and the first oxygen-containing gas has a volume content of oxygen ranging from 10% to 100%, where x=1 to 1.3, y=0.1 to 0.9, z=0.1 to 0.9, and x:(y+z)=1.4 to 1.6.

In the present application, firstly, NH₄F, LiₓNi_{y}Mn_{z}O₂ and water are mixed, NH₄F may be double hydrolyzed in the water, so that a solution is weakly acidic, moreover, HF acid obtained by hydrolysis may be adsorbed onto a surface of LiₓNi_{y}Mn_{z}O₂ and react with LiₓNi_{y}Mn_{z}O₂, and fluorine is doped into LiₓNi_{y}Mn_{z}O₂ to obtain the fluorine-modified LiₓNi_{y}Mn_{z}O₂. Afterwards, the first calcination is carried out on the above fluorine-modified LiₓNi_{y}Mn_{z}O₂ to further dope fluorine into the material, so as to obtain the fluorine-doped lithium positive electrode material doped with fluorine. Due to the protection of fluorine, the number of free oxygen entering the electrolyte solution in the first charging and discharging process is reduced when the material is used as a positive electrode of a lithium-ion battery, the number of lithium ions solidified into Li₂O by the free oxygen is reduced, and thus the primary efficiency of the lithium-ion battery is effectively improved. At the same time, the cycling performance and rate capability of the battery are also improved compared with a lithium positive electrode material without being doped with F.

As mentioned earlier, hydrolysis of NH₄F may generate hydrofluoric acid. In order to make acidity of the solution more suitable for the reaction, preferably, the mass ratio of NH₄F to LiₓNi_{y}Mn_{z}O₂ in the aqueous solution of NH₄F is (0.01-0.1):1. Within a range of the raw material ratio mentioned above, it may be further ensured that LiₓNi_{y}Mn_{z}O₂ is doped with more fluorine, in addition, an internal structure of the material is prevented from being corroded by HF acid, resulting in a decrease in performance, and especially at (0.05-0.07): 1, the effect is particularly prominent.

In some embodiments, the above step S1 includes: step S1, the aqueous solution of NH₄F and LiₓNi_{y}Mn_{z}O₂ are mixed under a first stirring, and the reaction is carried out to obtain the intermediate product system. The aqueous solution of NH₄F is prepared firstly, then the aqueous solution is mixed with LiₓNi_{y}Mn_{z}O₂, and the reaction is carried out, so that NH₄F may be fully hydrolyzed, moreover, LiₓNi_{y}Mn_{z}O₂ may be better dispersed in the aqueous solution of NH₄F, and thus the hydrofluoric acid and LiₓNi_{y}Mn_{z}O₂ particles may react faster and more uniformly.

The speed of the above first stirring may be selected by those skilled in the art according to needs in actual operations, and in order to further improve a reaction rate and a reaction effect, preferably, the first stirring is carried out at the speed ranging from 300 rpm to 2000 rpm for 1 min to 10 min.

In order to retain more fluorine in LiₓNi_{y}Mn_{z}O₂ and reduce the impact of impurities on a calcination effect before entering the first calcination step, preferably, before step S2, the preparation method further includes: the intermediate product system is filtered to obtain fluorine-modified LiₓNi_{y}Mn_{z}O₂. The above filtering method may be selected from commonly used filtering methods in the art, such as pressure filtration, suction filtration and centrifugal separation, which will not be repeated here.

As mentioned earlier, an objective of the first calcination is to further infiltrate fluorine into LiₓNi_{y}Mn_{z}O₂ to achieve a better doping effect, and preferably, the first calcination is carried out at a temperature ranging from 400°C to 800°C for 4h to 8h. Within the above parameter range, infiltration of fluorine may be relatively quickly achieved, and meanwhile, it is ensured that the structural stability of the material may not be reduced due to excess sintering temperature. Preferably, the first oxygen-containing gas has a volume content of oxygen ranging from 10% to 100%, and preferably, the first oxygen-containing gas is air. Preferably, the first oxygen-containing gas has a flow rate ranging from 5 L/min to 10 L/min, the oxygen-containing gas is used for sintering, and Ni is prevented from occupying a position of Li, resulting in a decrease in material stability.

LiₓNi_{y}Mn_{z}O₂ used in the present application may be an existing material in the prior art or prepared by using known methods in the prior art. In some embodiments, the above preparation method further includes a preparation process for LiₓNi_{y}Mn_{z}O₂, and the preparation process includes: a second calcination is carried out on a raw material system containing a NiₐMn_{b}CO₃ precursor and a lithium compound in a second oxygen-containing gas to obtain LiₓNi_{y}Mn_{z}O₂, where a=0.1 to 0.9, b=0.1 to 0.9, and a+b=1. Nickel and manganese contents may be flexibly adjusted through the above preparation process. Preferably, a ratio of a molar weight of lithium in the lithium compound to a sum of molar weights of nickel and manganese in the NiₐMn_{b}CO₃ precursor is in a range from 1.4 to 1.6, thereby further ensuring that the content of Li in LiₓNi_{y}Mn_{z}O₂ is within a preferred range. In order to avoid introducing impurities into a reaction system as much as possible, preferably, the lithium compound is selected from one or more of lithium hydroxide, lithium carbonate, lithium chloride, and lithium acetate. The above lithium compounds are all alkaline. Therefore, when the preparation method of the present application is used, due to the acidity of NH₄F after hydrolysis, LiₓNi_{y}Mn_{z}O₂ may be fluorinated while removing its unreacted lithium compounds to avoid their impacts on subsequent reactions.

Further preferably, the NiₐMn_{b}CO₃ precursor has a particle size ranging from 5 µm to 10 µm, preferably, the NiₐMn_{b}CO₃ precursor has a specific surface area (BET) ranging from 20 m²/g to 120 m²/g, and preferably, the NiₐMn_{b}CO₃ precursor has a tap density (TD) ranging from 1.4 g/cm³ to 2.5 g/cm³. A fluorine-doped lithium positive electrode material with particle size and specific surface area that are conducive to homogenate coating can be prepared from the NiₐMn_{b}CO₃ precursor within the above parameter range. Preferably, the second calcination is carried out at a temperature ranging from 750°C to 850°C for 8h to 12h, preferably, the second oxygen-containing gas has a volume content of oxygen ranging from 10% to 100%, and preferably, the second oxygen-containing gas is air. Preferably, the second oxygen-containing gas has a flow rate ranging from 5 L/min to 10 L/min, so as to further improve a preparation rate and effect of LiₓNi_{y}Mn_{z}O₂.

According to another typical implementation of the present application, a fluorine-doped lithium positive electrode material is provided, and the fluorine-doped lithium positive electrode material is prepared by any above preparation method.

The fluorine-doped lithium positive electrode material of the present application is doped with fluorine, and the stability of a bond formed by fluorine and metal is higher than stability of a bond formed by oxygen and metal. Therefore, by doping fluorine, oxygen inside the material may be protected by fluorine, which reduces free oxygen that escapes from the material and enters an electrolyte solution in a charging and discharging process, especially the number of free oxygen that enters the electrolyte solution after first charging and discharging. Less free oxygen may reduce the number of lithium ions that are solidified by the free oxygen and cannot continue to participate in electrochemical reactions in a form of Li₂O, so that the number of free lithium ions in the electrolyte solution is significantly improved, and primary efficiency of the lithium-ion battery is effectively improved. At the same time, the fluorine-doped lithium positive electrode material of the present application also improves the cycling performance and rate capability of the battery compared with a lithium positive electrode material without being doped with F. In addition, the fluorine content of the fluorine-doped lithium positive electrode material within the above range can better ensure the structural integrity of the material, and thus ensure the advantages of high primary efficiency, and good cycling performance and rate capability.

According to yet another typical implementation of the present application, a lithium-ion battery is provided, containing an electrolyte solution, a positive electrode material and a negative electrode material, the positive electrode material contains a lithium positive electrode material, and the lithium positive electrode material is any above fluorine-doped lithium positive electrode material or a fluorine-doped lithium positive electrode material prepared by any above preparation method.

Due to the protection of fluorine, the number of free oxygen entering the electrolyte solution in the first charging and discharging process is reduced when the material in the present application is used as a positive electrode of the lithium-ion battery, the number of lithium ions solidified into Li₂O by the free oxygen is reduced, and thus the primary efficiency of the lithium-ion battery is effectively improved. At the same time, the cycling performance and rate capability of the battery are also improved compared with a lithium positive electrode material without being doped with F.

The beneficial effects of the present application are further described below in conjunction with Examples and a Comparative Example.

### Example 1

1) Ni_{0.25}Mn_{0.75}CO₃ was taken as a precursor (with a particle size ranging from 5 µm to 10 µm, BET=20 m²/g, and TD=1.6 g/cm³), 26.96 g of LiOH·H₂O and 50 g of Ni_{0.25}Mn_{0.75}CO₃ were weighed (based on nLi/(nNi+nMn)=1.5), a handheld stirrer was adopted to stir at a stirring speed of 2000 rpm for 15 min to uniformly mix the Ni_{0.25}Mn_{0.75}CO₃ precursor and a lithium salt, a calcination was carried out at 800°C for 10h, a calcination atmosphere was air, a gas flow rate was 10 L/min, and a Li_{1.20}Ni_{0.20}Mn_{0.60}O₂ material was obtained.
2) An aqueous solution of NH₄F with a concentration of 15 g/L was prepared, and 500 g of Li_{1.20}Ni_{0.20}Mn_{0.60}O₂ was weighed in a mass ratio of NH₄F:Li_{1.20}Ni_{0.20}Mn_{0.60}O₂=0.03:1. Li_{1.20}Ni_{0.20}Mn_{0.60}O₂ powder was added into the aqueous solution of NH₄F under a first stirring condition (with a speed of 2000 rpm for 10 min), and an intermediate product system was obtained.
3) The intermediate product system was filtered to obtain fluorine-modified Li_{1.20}Ni_{0.20}Mn_{0.60}O₂.
4) The fluorine-modified Li_{1.20}Ni_{0.20}Mn_{0.60}O₂ was calcinated (with a temperature of 550°C for 6h) in air (with a flow rate of air of 6.5 L/min), and a fluorine-doped lithium positive electrode material was obtained.

### Example 2

The difference from Example 1 is that 500 g of Li_{1.20}Ni_{0.20}Mn_{0.60}O₂ was weighed in a mass ratio of NH₄F:Li_{1.20}Ni_{0.20}Mn_{0.60}O₂=0.05:1. An aqueous solution of NH₄F with a concentration of 25 g/L was prepared.

### Example 3

The difference from Example 1 is that 500 g of Li_{1.20}Ni_{0.20}Mn_{0.60}O₂ was weighed in a mass ratio of NH₄F:Li_{1.20}Ni_{0.20}Mn_{0.60}O₂=0.07:1. An aqueous solution of NH₄F with a concentration of 35 g/L was prepared.

### Example 4

The difference from Example 1 is that 500 g of Li_{1.20}Ni_{0.20}Mn_{0.60}O₂ was weighed in a mass ratio of NH₄F:Li_{1.20}Ni_{0.20}Mn_{0.60}O₂=0.1:1. An aqueous solution of NH₄F with a concentration of 50 g/L was prepared.

### Example 5

The difference from Example 1 is that 500 g of Li_{1.20}Ni_{0.20}Mn_{0.60}O₂ was weighed in a mass ratio of NH₄F:Li_{1.20}Ni_{0.20}Mn_{0.60}O₂=0.01:1. An aqueous solution of NH₄F with a concentration of 5 g/L was prepared.

### Example 6

The difference from Example 1 is that 500 g of Li_{1.20}Ni_{0.20}Mn_{0.60}O₂ was weighed in a mass ratio of NH₄F:Li_{1.20}Ni_{0.20}Mn_{0.60}O₂=0.12:1. The aqueous solution of NH₄F with a concentration of 60 g/L was prepared.

### Example 7

The difference from Example 1 is that in step 4), a temperature of calcination was 400°C.

### Example 8

The difference from Example 1 is that in step 4), a temperature of calcination was 800°C.

### Example 9

The difference from Example 1 is that in step 4), a temperature of calcination was 300°C.

### Example 10

The difference from Example 1 is that in step 4), a temperature of calcination was 900°C.

### Example 11

The difference from Example 1 is that in step 4), a calcination was carried out for 4h.

### Example 12

The difference from Example 1 is that in step 4), a calcination was carried out for 8h.

### Example 13

The difference from Example 1 is that in step 4), a calcination was carried out for 8h.

### Example 14

The difference from Example 1 is that in step 4), a calcination was carried out for 9h.

### Example 15

The difference from Example 1 is that in step 4), a flow rate of air was 5 L/min.

### Example 16

The difference from Example 1 is that in step 4), a flow rate of air was 10 L/min.

### Example 17

The difference from Example 1 is that,
in 1), Ni_{0.25}Mn_{0.75}CO₃ was taken as a precursor (with a particle size ranging from 5µm to 10 µm, BET=20 m²/g, and TD=1.4 g/cm³), 25.16g of LiOH·H₂O and 50g of Ni_{0.25}Mn_{0.75}CO₃ were weighed (based on nLi/(nNi+nMn)=1.4), a handheld stirrer was adopted to stir at a stirring speed of 2000 rpm for Imin to uniformly mix the Ni_{0.25}Mn_{0.75}CO₃ precursor and a lithium salt, a calcination was carried out at 750°C for 8h, a calcination atmosphere was oxygen, a gas flow rate was 5 L/min, and a Li_{1.2}Ni_{0.2}Mn_{0.6}O₂ material was obtained.

### Example 18

The difference from Example 1 is that,
in 1), Ni_{0.75}Mn_{0.25}CO₃ was taken as a precursor (with a particle size ranging from 5 µm to 10 µm, BET=120 m²/g, and TD=2.5 g/cm³), 28.76 g of LiOH·H₂O and 50 g of Ni_{0.75}Mn_{0.25}CO₃ were weighed (based on nLi/(nNi+nMn)=1.6), a handheld stirrer was adopted to stir at a stirring speed of 300 rpm for 10 min to uniformly mix the Ni_{0.75}Mn_{0.25}CO₃ precursor and a lithium salt, a calcination was carried out at 850°C for 12h, a calcination atmosphere was air, a gas flow rate was 10 L/min, and a Li_{1.28}Ni_{0.6}Mn_{0.2}O₂ material was obtained.

### Comparative Example 1

Ni_{0.25}Mn_{0.75}CO₃ was taken as a precursor (with a particle size ranging from 5 µm to 10 µm, BET=20 m²/g, and TD=1.6 g/cm³), 25.16 g of LiOH·H₂O and 50 g of Ni_{0.25}Mn_{0.75}CO₃ were weighed (based on nLi/(nNi+nMn)=1.4), a handheld stirrer was adopted to stir at a stirring speed of 300 rpm for 1min to uniformly mix the Ni_{0.25}Mn_{0.75}CO₃ precursor and a lithium salt, a calcination was carried out at 750°C for 8h, a calcination atmosphere was air, a gas flow rate was 5 L/min, and a Li_{1.20}Ni_{0.20}Mn_{0.60}O₂ material was obtained.

### Homogenate coating and button-battery assembly

A homogenate coating with a ratio of fluorine-doped lithium positive electrode material, Super p acetylene black, and PVDF glue liquor = 92:4:4 was carried out, wherein a solid content of the PVDF glue liquor was 6.05%. A prepared electrode piece was subjected to button-battery assembly by adopting a CR2032 shell, with a voltage window of 2-4.8V negative electrode material lithium metal, an electrolyte solution was a conventional lithium-rich electrolyte solution: 1 mol/L LiPF₆, and a volume ratio of ethylene carbonate (EC) to diethyl carbonate (DEC) was 3:7.

### Performance test of button-battery

Under a room temperature, an assembled simulate battery was subjected to standing for 12 hours, and an electrode material was fully infiltrated in an electrolyte solution. Then, it was tested on a LAND CT-2001A testing system. The 0.1C discharge capacity, 1C discharge capacity, primary efficiency and 50-cycle capacity retention ratio of the above Examples and Comparative Example are as shown in Table 1.

### SEM characterization

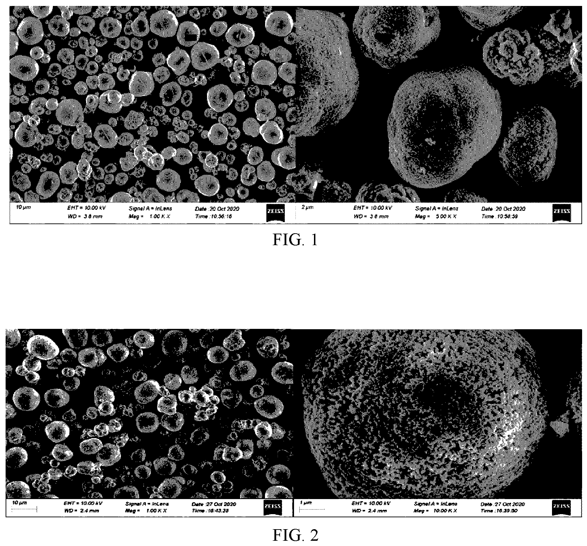

SEM characterization was carried out on the fluorine-doped lithium positive electrode material prepared in Example 2, referring to FIG. 1, and SEM characterization on the lithium positive electrode material without fluorine doping prepared in Comparative Example 1 is shown in FIG. 2. It can be seen that there is no significant change in the structure and surface physical properties of the lithium positive electrode material before and after fluorine doping, indicating that the method of the present application will not have adverse effects on the structure of the lithium positive electrode material.

**Table 1**

| | 0.1C discharge capacity/mAhg¹ | 1C discharge capacity/mAhg¹ | Primary efficiency/% | 50-cycle capacity retention ratio/% |
|---|---|---|---|---|
| Example 1 | 252.7 | 200.1 | 78.2 | 86.5 |
| Example 2 | 269.4 | 210.4 | 83.1 | 88.9 |
| Example 3 | 245.8 | 205.1 | 82.1 | 88.1 |
| Example 4 | 192.1 | 195.1 | 73.5 | 83.1 |
| Example 5 | 242.6 | 197.2 | 75.0 | 85.2 |
| Example 6 | 175.6 | 150.2 | 68.0 | 80.4 |
| Example 7 | 251.8 | 198.8 | 81.2 | 86.4 |
| Example 8 | 251.2 | 201.3 | 80.3 | 85.2 |
| Example 9 | 180.1 | 170.1 | 67.2 | 80.1 |
| Example 10 | 169.4 | 150.2 | 73.5 | 78.5 |
| Example 11 | 237.7 | 196.5 | 79.1 | 85.1 |
| Example 12 | 231.2 | 195.4 | 76.1 | 86.1 |
| Example 13 | 166.2 | 159.2 | 68.0 | 75.5 |
| Example 14 | 181.0 | 165.6 | 68.3 | 83.2 |
| Example 15 | 247.7 | 198.5 | 76.3 | 85.1 |
| Example 16 | 254.5 | 201.9 | 79.3 | 87.3 |
| Example 17 | 200.4 | 195.6 | 74.5 | 82.4 |
| Example 18 | 210.5 | 190.1 | 80.8 | 82.1 |
| Comparative Example 1 | 152.2 | 130.2 | 60.2 | 70.3 |

It can be seen from the above description that the above embodiments of the present disclosure have achieved the following technical effects.

In the present application, firstly, NH₄F, LiₓNi_{y}Mn_{z}O₂ and water are mixed, NH₄F may be double hydrolyzed in the water, so that a solution is weakly acidic, moreover, HF acid obtained by hydrolysis may be adsorbed onto a surface of LiₓNi_{y}Mn_{z}O₂ and react with LiₓNi_{y}Mn_{z}O₂, and fluorine is doped into LiₓNi_{y}Mn_{z}O₂ to obtain fluorine-modified LiₓNi_{y}Mn_{z}O₂. Afterwards, a first calcination is carried out on the above fluorine-modified LiₓNi_{y}Mn_{z}O₂ to further dope fluorine into the material, so as to obtain a fluorine-doped lithium positive electrode material doped with fluorine. Due to the protection of fluorine, the number of free oxygen entering the electrolyte solution in the first charging and discharging process is reduced when the material is used as a positive electrode of the lithium-ion battery, the number of lithium ions solidified into Li₂O by the free oxygen is reduced, and thus the primary efficiency of the lithium-ion battery is effectively improved. At the same time, the cycling performance and rate capability of the battery are also improved compared with a lithium positive electrode material without F doping.

The foregoing descriptions are only preferred embodiments of the present disclosure and are not used to limit the present disclosure. For those skilled in the art, the present disclosure may have various modifications and changes. Any modification, equivalent replacement, improvement, etc. made within the spirit and principle of the present disclosure should be included in the protection scope of the present disclosure.

## Claims

1. A preparation method for a fluorine-doped lithium positive electrode material, comprising:
step S1, mixing NH₄F, LiₓNi_{y}Mn_{z}O₂ and water, and carrying out a reaction to obtain an intermediate product system, wherein the intermediate product system comprises a fluorine-modified LiₓNi_{y}Mn_{z}O₂, and a mass ratio of NH₄F to LiₓNi_{y}Mn_{z}O₂ is (0.05-0.07):1; and
step S2, carrying out a first calcination on the fluorine-modified LiₓNi_{y}Mn_{z}O₂ in a first oxygen-containing gas to obtain the fluorine-doped lithium positive electrode material, wherein the first oxygen-containing gas has a volume content of oxygen ranging from 10% to 100%,
wherein x=1 to 1.3, y=0.1 to 0.9, z=0.1 to 0.9, and x:(y+z)=1.4 to 1.6.

2. The preparation method according to claim 1, wherein the step S1 comprises:
step S1, mixing an aqueous solution of NH₄F with LiₓNi_{y}Mn_{z}O₂ under a first stirring, and carrying out the reaction to obtain the intermediate product system.

3. The preparation method according to claim 1, wherein before the step S2, the preparation method further comprises:
filtering the intermediate product system to obtain the fluorine-modified LiₓNi_{y}Mn_{z}O₂.

4. The preparation method according to claim 1, wherein the first calcination is carried out at a temperature ranging from 400°C to 800°C for 4h to 8h.

5. The preparation method according to any one of claims 1 to 4, wherein the first oxygen-containing gas has a flow rate ranging from 5 L/min to 10 L/min.

6. The preparation method according to claim 1, wherein the first oxygen-containing gas is air.

7. The preparation method according to claim 1, further comprising a preparation process for LiₓNi_{y}Mn_{z}O₂, wherein the preparation process comprises:
carrying out a second calcination on a raw material system containing a NiₐMn_{b}CO₃ precursor and a lithium compound in a second oxygen-containing gas to obtain LiₓNi_{y}Mn_{z}O₂, wherein a=0.1 to 0.9, b=0.1 to 0.9, and a+b=1.

8. The preparation method according to claim 7, wherein a ratio of a molar weight of lithium in the lithium compound to a sum of molar weights of nickel and manganese in the NiₐMn_{b}CO₃ precursor is in a range from 1.4 to 1.6.

9. The preparation method according to claim 7, wherein the lithium compound is selected from one or more of lithium hydroxide, lithium carbonate, lithium chloride, and lithium acetate.

10. The preparation method according to any one of claims 7 to 9, wherein the NiₐMn_{b}CO₃ precursor has a particle size ranging from 5 µm to 10 µm, preferably, the NiₐMn_{b}CO₃ precursor has a specific surface area ranging from 20 m²/g to 120 m²/g, and preferably, the NiₐMn_{b}CO₃ precursor has a tap density ranging from 1.4 g/cm³ to 2.5 g/cm³.

11. The preparation method according to claim 7, wherein the second calcination is carried out at a temperature ranging from 750°C to 850°C for 8h to 12h.

12. The preparation method according to claim 7 or 11, wherein the second oxygen-containing gas has a volume content of oxygen ranging from 10% to 100%, preferably, the second oxygen-containing gas is air, and preferably, the second oxygen-containing gas has a flow rate ranging from 5 L/min to 10 L/min.

13. A fluorine-doped lithium positive electrode material, wherein the fluorine-doped lithium positive electrode material is prepared by the preparation method according to any one of claims 1 to 12.

14. A lithium-ion battery, comprising an electrolyte solution, a positive electrode material and a negative electrode material, the positive electrode material comprising a lithium positive electrode material, wherein the lithium positive electrode material is the fluorine-doped lithium positive electrode material according to claim 13.
